# EUROPÄISCHE PATENTSCHRIFT

(11) **EP 0 622 172 B1**
(45) Veröffentlichungstag und Bekanntmachung des Hinweises auf die Patenterteilung: **24.05.2000**
(21) Anmeldenummer: 94105752.3
(22) Anmeldetag: 14.04.1994
(51) Int. Cl.: B29C 70/12, E04D 5/06, E21D 11/00, C08J 5/06

(54) **Kurzfaserverstärkte Kunststofffolie**
Plastic film reinforced with short fibers
Feuille de matière plastique renforcée par des fibres courtes

(30) Priorität: 29.04.1993 CH 130493
(43) Veröffentlichungstag der Anmeldung: 02.11.1994
(73) Patentinhaber: Sika AG, vorm. Kaspar Winkler & Co., CH-8048 Zürich (CH)
(72) Erfinder: Ströhle, Gerhard, CH-4934 Madiswil (CH); Gujer, Peter, CH-8404 Winterthur (CH); Arber, Willy, Dr., CH-8174 Stadel b/Niederglatt (CH); Slongo, Mario, Dr., CH-1712 Tafers (CH)
(74) Vertreter: Blum, Rudolf Emil Ernst

(56) Entgegenhaltungen:
- FR-A- 2 507 123
- US-A- 3 869 306
- US-A- 4 595 620
- COMPOSITES. PLASTIQUES RENFORCES FIBRES DE VERRE TEXTILE, Bd.25, Nr.1, 1985, PARIS FR Seiten 50 - 55 'RENFORCEMENT DU PVC SOUPLE PAR LES FIBRES SANTOWEB W'
- PATENT ABSTRACTS OF JAPAN vol. 13, no. 60 (M-796) 10. Februar 1989 & JP-A-63 265 609 (DAINICHI COLOR & CHEM MFG CO) 2. November 1988
- KAUTSCHUK UND GUMMI - KUNSTSTOFFE, Bd.45, Nr.7, Juli 1992, HEIDELBERG DE Seiten 548 - 549, XP000293013 TH. F. SCHULER 'KEVLAR SHORT FIBER REINFORCEMENT OF ELASTOMER MATRICES'

## Beschreibung

Die vorliegende Erfindung betrifft eine mit oberflächenbehandelten Kurzfasern verstärkte flexible Kunststoffolie, sowie Verfahren zu deren Herstellung, und deren Verwendung.

Auf dem Baustoffgebiet werden sowohl nicht-verstärkte als auch verstärkte Kunststoffolien für die verschiedensten Zwecke verwendet (siehe z.B. SIA-Norm 280 (1983)).

Die SIA-Norm 280 (1983) betrifft allgemein Kunststoff-Dichtungsbahnen, nach Definition fabrikmässig hergestellte flexible Bahnen, in Rollenform geliefert oder zu Planen in der Fabrik vorkonfektioniert. Solche Bahnen dienen zur Abdichtung von Bauwerken. Ein wesentliches Kriterium für die flexible Bahn ist die Faltbiegung in der Kälte, die je nach Verwendung bei -10°C oder -20°C durchgeführt wird und bei Faltung auf einen inneren Radius von 2 mm zu keiner Rissbildung führen darf, (Beurteilung mit sechsfach vergrössernder Lupe).

Eine glasfaser verstärkte Kunststoffolie gemäß dem Oberbegriff des Anspruches 1 ist aus dem Dokument US-A- 4 595 620 bekannt.

Die nicht-verstärkten Kunststoffolien, haben jedoch auch Nachteile. Zum Beispiel können sie hohe Schrumpfwerte aufweisen, haben einen grossen thermischen Ausdehnungskoeffizienten, haben teilweise eine mangelhafte Verarbeitbarkeit (z.B. beim Schweissen) und können nur eine mittelmässige Festigkeit aufweisen, was bedingt, dass deren Einsatz vor allem bei Abdichtungen und Isolationen, wie im Dach- und Tunnelbau, nicht ganz zufriedenstellend sein kann. Man hat deshalb versucht diese Nachteile durch eine Verstärkung zu reduzieren. Die Verstärkung der Kunststoffe kann z.B. durch Gitter, Gewebe, Gelege oder Vliese aus synthetischen und anorganischen Fasern erfolgen. Zweck dieser Verstärkungen ist es, die Eigenschaften der Kunststoffe zu verbessern. So werden z.B. auf dem Baustoffgebiet gitterverstärkte Kunststoffolien verwendet, die darin bestehen, dass sich zwischen der Unter- und Oberschicht der Folie ein Gittergelege, Gittergewebe oder Vlies befindet. Eine derartige Verstärkung bedarf aber eines aufwendigen Herstellungsverfahrens und birgt die Gefahr der Delaminierung in sich und gibt Probleme bei der Knotenüberdeckung.

Um diese Nachteile zu vermindern wurde vorgeschlagen Kurzfasern in die Kunststoffe einzubetten und die übliche Gitterverstärkung ganz auszuschliessen.

Kunststoffe, die konventionelle Kurzfasern enthalten, beschreibt z.B. Th.F. Schuler in Kautschuk und Gummi-Kunststoffe, Bd. 45, Nr. 7, Juli 1992 S. 548-549 "Kevlar Short Fiber Reinforcement of Elastomer Matrices" mit einer Kurzfaserverstärkung von elastomeren Matrizen; die US-A-4,595,620 offenbart einen gefalteten Artikel aus einer Kurzfaserverstärkten Kunststoffolie und die FR-A-2,507,123 beschreibt ein Halbzeug, welches eine Thermoplastmatrix und darin eingebettet eine Polyamidpulpe enthält, wobei ein Teil dieser Pulpe z.B. durch eine mineralische Kurzfaser ersetzt sein kann. Aber all diese, durch konventionelle Kurzfasern bedingten Verstärkungen, bringen vorallem bei flexiblen Kunststoffolien, welche im Dach- und Tunnelbau angewandt werden, noch nicht zufriedenstellend die gewünschten physikalischen und chemischen Eigenschaften. Zudem treten Haftungsprobleme zwischen der Kurzfaser und der Matrix auf. Composites, Plastiques Renforces, Fibre de verre Textile, Bd. 25, Nr. 1, 1985, Seiten 50-55 beschreibt nun im Artikel "Renforcement du PVC Souple par les fibres Santoweb W" eine oberflächenbehandelte Cellulosefaser in einer Matrix aus Weich-Polyvinylchlorid. Diese Literaturstelle gibt darüber hinaus aber keinerlei Hinweise auf den Einsatz anderer oberflächenbehandelten Kurzfasern, und auf deren Oberflächenbehandlung.

Eine Aufgabe der Erfindung war es daher, vor allem für Anwendungen im Dachbau und im Tunnelbau, Abdichtungen bzw. Isolationen bereitzustellen, die die oben aufgezeigten Nachteile nicht aufweisen.

Die Lösung wird erfindungsgemäss mit einer flexiblen verstärkten Kunststoffolie gemäß Anspruch 1 erreicht. Ueberraschenderweise wurde gefunden, dass eine derartig verstärkte Kunststoffolie nicht nur im Dach- und Tunnelbau eingesetzt werden kann, sondern auch gegenüber den bekannten, oben genannten verstärkten Kunststoffolien keine nachteiligen Eigenschaften aufweist, sondern vielmehr diesen in manchen Eigenschaften überlegen ist.

Der Matrix Kunststoff, der als Hüllmaterial die oberflächenbehandelten Kurzfasern eingeschlossen hält, kann ein beliebiges Homopolymerisat oder Copolymerisat z.B. von einem Thermoplast, einem Elastomer, einem thermoplastischen Elastomer oder von einem Polymerblend sein. All diese Kunststoffe sind bekannt und können nach bekannter Art und Weise z.B. einer Polyreaktion wie Polyaddition, Polykondensation und Polymerisation und einer Polymer-analogen Reaktion hergestellt werden.

Unter Thermoplast versteht man Kunststoffe mit linearem oder verzweigtem Aufbau. Beispielhaft sind erwähnt Homopolymerisate, wie Polyethylen, niederer, mittlerer oder hoher Dichte, und insbesondere ultra-niederer Dichte, Polyethylen niederer Dichte mit linearer Struktur, Polypropylen, Polyamide wie Nylon 11 und Nylon 12, Polyester, Polyvinylchlorid, vorallem Weich-Polyvinylchlorid, Poly-1-buten, Poly-isobutylen, Ionomere, Polyvinylidenchlorid, Polymethylmethacrylat, Polyvinylalkohol, Polyvinylacetat, sowie Copolymerisate aus Styrol/Acrylnitril, Styrol/Acrylnitril und Butadien, Polyvinylchlorid/Ethylenvinylacetat, Ethylen/Acrylsäureester, Ethylen/Vinylacetat, Propylen, copolymerisiert mit anderen α-Olefinen wie z.B. Ethylen oder Buten, Ethylen/-Propylen/1-Buten, Vinylidenchlorid/Vinylchlorid, Methylmethacrylat/Ethylacrylat, sowie Nylon 6/Nylon 66.

Unter Elastomer sind im allgemeinen weitmaschig vernetzte Kunststoffe zu verstehen. Als Beispiele sind erwähnt: olefinische Elastomere, wie ein Ethylen/Propylen-Copolymer, Ethylen/Propylen Dien-Copolymer, ein Ethylen/Vinylacetat-Copolymer und ein Ethylen/Ethylacrylat-Copolymer; des weiteren Natur- und Synthesekautschuk, Styrol-Butadienkautschuk, Butylkautschuk, Nitrilkautschuk, Fluor-Elastomere, Polyacrylate, Polyurethane, Silikonkautschuk, Polysulfid-kautschuk, Chloroprenkautschuk, chlorsulfoniertes Polyethylen und chloriertes Polyethylen.

Thermoplastische Elastomere sind z.B. Styrol-Butadien-Styrol-Elastomer, Styrol-Ethylen-Buten-Styrol thermoplastisches Polyurethan Elastomer sowie thermoplastische Polyester und Polyamid Elastomere und Polyolefinische thermoplastische Elastomere wobei die Elastomerkomponente in teilvernetzter Form vorliegen kann.

Schliesslich kommen Polymerblends in Frage, das sind Mischungen unterschiedlicher Polymere. Erwähnt sind beispielsweise Polyvinylchlorid/Ethylen-Vinylacetat (Mischungsverhältnis etwa 9:1 bis 6:4), Polyvinylchlorid/Vinylchlorid-Vinylacetat (Mischungsverhältnis etwa 9:1 bis 3:7), Polyvinylchlorid/chloriertes Polyethylen (Mischungsverhältnis etwa 9:1 bis 4:6), und Polyvinylchlorid/Polymethylmethacrylat (Mischungsverhältnis etwa 9:1 bis 8:2).

Die bevorzugte Matrix ist ein Thermoplast, vor allem Polyvinylchlorid (PVC), insbesondere Weich-Polyvinylchlorid, ein Ethylenvinylacetat welches mit Polyvinylchlorid gepfropft ist, (EVA-gPVC) und ein Polyethylen ultra-niederer Dichte (VLD-PE).

Bei den oberflächenbehandelten Kurzfasern handelt es sich um Glaskeramikfasern.

Die Kurzfasern sind oberflächenbehandelt. Diese Oberflächenbehandlung bildet auf der Faser einen dünnen Film welcher auf der Kurzfaser in der Matrix beibehalten wird und u.a. für die gute Haftung zur Matrix, gegebenenfalls über einen Modifier, verantwortlich ist. Diese Behandlung kann nach bekannter Art und Weise chemisch, z.B. durch imprägnieren mit einem Behandlungsmittel, oder physikalisch vorgenommen werden; anschliessend wird gegebenenfalls getrocknet.

Als chemische Behandlungsmittel kommen z.B. Silan Verbindungen, wie Aminosilane oder Epoxysilane oder auch Polyurethane oder Zuckerverbindungen (z.B. Dexole) in Betracht. (Siehe z.B. Fa. DEGUSSA, Schriftenreihe Pigmente, Nr. 75, Okt. 1987 oder Broschüre Textilglas von VETROTEX)

Diese Fasern, die als Kurzfasern verwendet werden, haben eine Länge von etwa 0.3 bis 10 mm, vor allem 1 bis 6 mm, insbesondere 3 bis 6 mm, einen Durchmesser von etwa 5 µm bis 1 mm und insbesondere eine Feinheit von etwa 8-14 µm.
Die Menge der oberflächenbehandelten Kurzfasern in der Kunststoffolie bewegt sich zwischen 1 bis 40 Gew.%, vor allem 2 bis 20 Gew.% und insbesondere 2 bis 16 Gew.%.

Diese Menge, und damit das Verhältnis der Kurzfaser zur Matrix, kann dabei in Abhängigkeit von der Anwendung der kurzfaserverstärkten Kunststoffolie variieren. Zum Beispiel werden zur Erzielung möglichst hoher Festigkeiten und hohem Modul mehr als 15% Glasfasern verwendet; wird hingegen nur eine bessere Formstabilität gefordert, so werden weniger als 5% Glasfasern eingesetzt.

Die oberflächenbehandelten Kurzfasern sind in die Matrix eingebettet und statistisch sowohl an der Oberseite, Unterseite und in der Mitte verteilt.

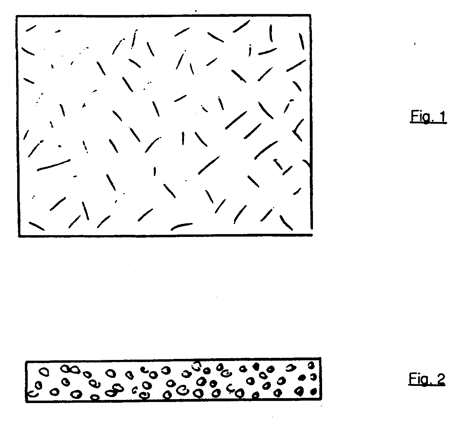

Die in die Matrix eingebetteten oberflächenbehandelten Kurzfasern sind als solche vom blossen Auge nicht sichtbar. Fig. 1 zeigt eine mögliche Verteilung der Kurzfasern in einer Folie (Draufsicht) und Fig. 2 veranschaulicht eine mögliche Verteilung der Kurzfasern im Querschnitt einer Folie.

Die oberflächenbehandelten Kurzfasern liegen vorzugsweise, vor allem im Hinblick auf die Verteilung, als Einzelfaser vor.

Durch die Kombination unterschiedlicher Materialien (Matrix-Kunststoff und oberflächenbehandelter Kurzfaser) werden die physikalischen Eigenschaften der Einzelkomponenten übertroffen.

Des weiteren können die mit oberflächenbehandelten Kurzfasern verstärkten Kunststoffolien vorteilhaft noch Zusatzstoffe organischer und/oder anorganischer Natur enthalten.

Als derartige Zusatzstoffe sind z.B. erwähnt:
a) farbgebende Zusätze in Mengen von etwa 0.1 - 15 Gew.%, wie Pigmente, falls farbige Kurzfaserverstärkte Kunststoffolien gewünscht werden; genannt sind beispielsweise anorganische Pigmente wie Titanoxid, Eisenoxid, Bleichromate, Chromoxide, Farbrusse und Zinkoxide, sowie organische Pigmente wie Chromophtale, Azopigmente, Dipyrolopyrole, Naphthol AS-Pigmente, Phthalocyanine, Chinacridone, Perylentetracarbonsäurederivate, Aminoanthrachinone und Isoindolin-Pigmente;
b) Weichmacher in Mengen von etwa 25 - 40 Gew.%, z.B. auf Basis von Phthalsäure, wie Di(2-ethylhexyl)phthalat, Diisooctyl-phthalat, Di(n-Octyl)phthalat, Di-n-Alkylphthalate, wie Dimethylphthalat, Diethylphthalat, Di-propylphthalat, Dibutylphthalat, Diisobutylphthalat, Butylbenzylphthalat, Dipentylphthalat, Dihexylphthalat und Diisoheptylphthalat; Diisononylphthalat, Di(n-Nonyl)phthalat, Diisodecylphthalat, Diundecylphthalat, Diisotridecylphthalat, Dicyclohexylphthalat, Diphenylphthalat, Dimethoxyglycolphthalat, Dibutoxyglycol-phthalat, und Di(methylcyclohexyl)phthalat; des weiteren Weichmacher auf Basis von Adipinsäure, wie Butylbenzyladipat, Benzyl-2-ethylhexyladipat, Diisotridecyladipat, Di(2-Ethylhexyl)adipat, Diisononyladipat, Diisodecyladipat, Dibutyladipat, Diisobutyladipat, Dibutoxyethyladipat, Diisooctyladipat und Di-n-Alkyladipat; Weichmacher auf Basis von Azelainsäure, wie Di-2-Ethylhexylazelat, Diisooctylazelat und Di-n-Hexylazelat; Weichmacher auf Basis von Sebazinsäure, wie Dibutylsebacat, Dioctylsebacat, Dimethylsebacat und Diisodecylsebacat; sowie Weichmacher auf Basis von Phosphorsäure, wie Trialkylphosphate z.B. Tributylphosphat, Tri(2-Ethylbutyl)phosphat, Tri(2-Ethylhexyl)phosphat, Trichlorethylphosphat, 2-Ethylhexyldiphenylphosphat, Cresyldiphenylphosphat, Triarylphosphate wie Triphenylphosphat und Arylalkylphosphate, wie Triisopropylphenylphosphat, und Tricresylphosphat;
c) Fungizide in Mengen von etwa 0.1 - 2 Gew.%, wie 10,10-Oxy-bis-phenoxyarsin, N-(Trihalogenomethylthio)-phtalimide, Diphenylantimon-2-ethylhexanoate, Kupfer-bis-(8-hydroxyquinolin) und Tributyloxid und Derivate;
d) Füllstoffe in Mengen von etwa 0.1 - 50 Gew.%, vor allem mineralische Materialien, wie Carbonate und Silikate, z.B. von Calzium, dann Bariumsulfat, Calziumsulfat und Aluminiumhydroxid;
e) Antioxidantien bekannter Art in Mengen von etwa 0.05 - 3 Gew.%, vor allem vom Typus sterisch gehinderter Phenole; sec. aromatischen Amine, Thioether, Phosphite und Phosphonite;
f) Lichtschutzmittel in Mengen von etwa 0.1 - 3 Gew.%, wie z.B. o-Hydroxyphenyl-Benzotriazole, o-Hydroxyphenyltriazine, und o-Hydroxybenzophenon, sowie vom Typus der sterisch gehinderten Amine (HALS);
g) Flammschutzmittel in Mengen von etwa 0.1 - 60 Gew.%, wie Antimontrioxid, Aluminiumtrihydrat, Magnesiumhydroxid und -oxid, Phosphorsäureester, Chlorparaffine, Dibrompentaerythrit, Hexachlorcyclopentadien, Octabromdiphenylether, Polydibromphenylenoxid, und Tetrabrombisphenol-A;
h) Stabilisatoren in Mengen von etwa 1 - 5 Gew.%, wie Ba/Zn, Ba/Cd, Ca/Zn-Stabilisatoren in Form von Salzen organischer Säuren oder anorganischer Säuren, wie Ba/Cd-Carboxylate, und Ca/Zn-Carboxylate oder substituierte Phenole; Organo-Zinn-Stabilisatoren, Aminocrotonsäureester, 2-Phenylindol, Phenylharnstoff, Diphenylthioharnstoff, Pb-Seifen, Methylzinn Mercaptide, Butylzinn Mercaptide, Butylzinn Carboxylate, Octylzinn Carboxylate, Octylzinn Mercaptide, Di-n-octylzinnmercaptide und Aminocarbonsäureester;
i) Co-Stabilisatoren in Mengen von etwa 1 - 5 Gew.%, wie organische Phosphite, epoxydierte Fettsäureester, wie epoxydiertes Sojabohnenöl, epoxydiertes Rizinusöl, epoxydiertes Leinöl, epoxydiertes Sonnenblumenöl, dann Sorbit, Trismethylolpropan, Dipentaerythrit, und Pentaerythrit;
k) Modifier in Mengen von etwa 2 - 10 Gew.%, wie Glycidylmethacrylat (GMA), Polymethylmethacrylat, (PMMA), Ethylenvinylacetat (EVA), Vinylchlorid/Ethylen-vinylacetat Co-Polymer, chloriertes Polyethylen, Acrylnitril/Butadien/Styrol Pfropfpolymer, Vinylchlorid/Acrylester Pfropfpolymer, Methylmethacrylat/Butadien/Styrol-Pfropfpolymer; α-Methylstyrol/Acrylnitril (α-MS/AN), Polyurethan (PU), EVA mit reaktivem OH, chemisch mit Maleinsäureanhydrid (MAH) modifizierte Polyolefine und Polyolefin-Co und Terpolymere, sowie
l) Gleitmittel in Mengen von etwa 0.1 - 2 Gew.%, z.B. Calziumlaurat, Calziumstearat, Calziumarachinat, und Calzium-12-Oxystearat, sowie die entsprechenden Zinn, Zink und Magnesiumsalze.

All diese Zusätze können einzeln oder in Mischung untereinander, also z.B. zwei oder mehrere voneinander unterschiedliche Modifier, gesamthaft in einer Menge von 0.1 bis 70.0 Gew.%, vorzugsweise 2 bis 45 Gew.%, bezogen auf die Gesamtmenge der Folie, vorhanden sein.

Anwendungstechnisch besonders interessante erfindungsgemässe kurzfaserverstärkte Kunststoffolien umfassen als Kunststoff-Matrix etwa 44 bis 55 Gew.% Weich-Polyvinylchlorid, welche ca. 2 bis 16 Gew.% einer oberflächenbehandelten Glasfaser mit einer Länge von 3 bis 6 mm und als Zusatz etwa 35-45 Gew.% vorallem Weichmacher, Stabilisator, Co-Stabilisator, Gleitmittel, Fungizid und gegebenenfalls Modifier enthält, ferner eine Kunststoff-Matrix, welche etwa 75 bis 80 Gew.% Ethylenvinylacetat gepfropft mit Polyvinylchlorid, welche ca. 5 bis 10 Gew.% einer oberflächenbehandelten Glasfaser mit einer Länge von 3 bis 6 mm und ca. 2 bis 20 Gew.% eines Zusatzes, vor allem einen Stabilisator, Co-Stabilisator, Gleitmittel, Fungizid und gegebenenfalls einen Modifier enthält, sowie eine Kunststoff-Matrix, aus etwa 90 bis 95 Gew.% Polyethylen ultra-niederer Dichte, welche etwa 2 bis 5 Gew.% einer oberflächenbehandelten Glasfaser mit einer Länge von 3 bis 6 mm und etwa 2 bis 5 Gew.% eines Zusatzes, vorallem eines Modifiers, enthält.

Die erfindungsgemässe kurzfaserverstärkte Kunststoffolie ist vor allem ein weiches, flexibles, wirtschaftlich günstiges Gebilde, vor allem Flächengebilde, welches ausgezeichnete Gesamteigenschaften aufweist; erwähnt sind z.B. sehr gute Dimensionsstabilität, hohe Altetungsbeständigkeit, sehr gute Witterungsbeständigkeit, Feuchtigkeitsundurchlässigkeit, hohe Belastbarkeit (z.B. wichtig bei Grundwasserabdichtungen), Begehbarkeit, gute Beständigkeit gegen chemische Einflüsse, vor allem eine hohe mechanische Festigkeit und thermische Stabilität, eine hohe Zugfestigkeit, tiefer Elastizitätsmodul, Wasserdampfdurchlässigkeit, kleiner Längenausdehnungskoeffizient, eine geringe Schwindung, sehr gute Beständigkeit gegenüber Mikroorganismen, Recyclierbarkeit der Folie und gute mechanische Befestigung und Verklebbarkeit. Darüber hinaus ist dieses Gebilde von tiefen Temperaturen (-30°C) bis hohen Temperaturen (+80°C) über Dauer beständig; vor allem besitzt es eine verbesserte Reissfestigkeit bei gleichzeitig höherer Dehnung, was zu einer Verbesserung des gesamten dynamischen Verhaltens des erfindungsgemässen Kurzfaserverstärkten Kunststoffoliengebildes führt.

Die Herstellung der Kurzfaserverstärkten Kunststoffolie kann nach bekannten Verfahren, wie Pressen, Giessen, Kalandrier-, Extrudier-, Blas-, Zieh- oder Streichverfahren erfolgen. Nach der Herstellung wird die Kurzfaserverstärkte Kunststoffolie vor allem in Rollenform oder zu Planen in der Fabrik vorkonfektioniert.

Das bevorzugte Verfahren ist das Kalanderverfahren. Bei diesem Verfahren werden z.B. entweder zunächst in einem Heissmischer nach dem Dry-Blend-Verfahren die Matrix-Komponente (z.B. S-PVC Pulver), die oberflächenbehandelte Kurzfaser und gegebenenfalls die Zusätze unter Rühren bei einer Temperatur von etwa 110°C bis 130°C während etwa 8-12 Minuten innig vermischt und das Dry-Blend hergestellt, oder die oberflächenbehandelten Kurzfasern können auch direkt in den Compounder oder Planetenwalzenextruder eingegeben werden, worin sich bereits das Dry-Blend (z.B. S-PVC Pulver und gegebenenfalls die Zusätze) befindet. Nach dem Abkühlen der Mischung im Kühlmischer auf etwa 65°C bis 75°C wird die Mischung in einen multiaxialen Compounder oder in einen multiaxialen Planetenwalzenextruder gegeben, in welchem die Plastifizierung der Mischung bei etwa 150°C bis 180°C erfolgt. Die plastifizierte Mischung wird anschliessend vom Extruder zum Kalander transportiert und unter geeigneten Walzendrücken, Temperatur und Geschwindigkeit zwischen den Kalanderwalzen hindurchgeführt, wobei sie bestimmte Dicken, Dichte, Transparenz oder auch bestimmte Oberflächeneffekte wie Glanz, Glätte und Prägung erhält. Anschliessend wird die fertige Folie aufgerollt. Wesentlich ist dabei, dass alle Komponenten vor dem Eintritt in den Kalander homogen und innig miteinander vermischt sind. Die Anwendung dieses Verfahrens ergibt keine Ueberdehnungsprobleme, die vor allem bei unverstärkten Folien, auftreten können.

Verwendung finden die kurzfaserverstärkten Kunststoffolien für die verschiedensten Anwendungen wie für Boden- und Wandbeläge, für Rohre, Schläuche, Bänder, und Profile und vor allem als Folien selbst, d.h. dünne, flächige, flexible, aufwickelbare Bahnen mit einer Dicke von etwa 0.1 bis 6.0 mm, vor allem 0.8 bis 4 mm für flexible Abdichtungen und Isolationen (Wärme, Kälte, Schall) z.B. im Dachbau, Tunnelbau, als Beckensystem, als Teichsystem, als Deponiesystem als Chemiewannenauskleidung und im Gewässerschutz z.B. als Auffang-Becken, Trinkwasserreservoir und Tank-lining.

Die Vorteile der erfindungsgemässen Kurzfaserverstärkten Kunststoffolie, liegen auf der Hand.

Gegenüber unverstärkten Folien ist die Automatenschweissbarkeit wesentlich verbessert und der thermische Ausdehnungskoeffizient erniedrigt, ebenso wird die Formstabilität erhöht. Beim Verschweissen von unverstärkten Folien gibt es durch Kontraktionen Einbussen in der Zugfestigkeit; im Gegensatz dazu wird mit der kurzfaserverstärkten Kunststoffolie die Nahtfestigkeit beibehalten.

Gegenüber Gitter, Gewebe, Gelege, und Vlies, verstärkten Folien fallen alle Knotenüberdeckungsprobleme weg; bei gitterverstärkten Folien spielt die Haftung des Gitters zur Matrix eine entscheidende Rolle, indem schlecht haftende Gitter zur Delaminierung führen; in den erfindungsgemässen kurzfaserverstärkten Kunststoffolien sind solche Delaminierungsprobleme völlig sekundär, da die Kurzfasern in der Matrix anisotrop verteilt sind.

Gegenüber konventionell kurzfaserverstärkten Kunststoffen des eingangs genannten Standes der Technik sind die Gebrauchseigenschaften und vorallem die Haftung der Kurzfaser zur Matrix wesentlich verbessert, und gegenüber der oberflächenbehandelten Cellulosefaser natürlichen Ursprungs in Weich-PVC verfügen die erfindungsgemässen Kunststoffolien infolge der Dimensionsvariabilität der glasfasern und spezifische Oberflächenbehandlung über eine universelle Anwendbarkeit sowie breite Optimierungsmöglichkeiten der speziell relevanten Eigenschaften in bezug auf eine bestimmte Anwendung.

Die Herstellung der kurzfaserverstärkten Kunststoffolie mittels der Kalandertechnologie ist wesentlich einfacher. Dazu kommt noch, dass die kurzfaserverstärkte Kunststoffolie ein besseres Recycliervermögen aufweist als eine gitterverstärkte oder vliesverstärkte Folie. Schliesslich haben kurzfaserverstärkte Kunststoffolien ein kleineres Volumen als gitterverstärkte Folien.

Die folgenden Beispiele veranschaulichen die Erfindung ohne sie darauf zu limitieren.

### Beispiel 1 (Herstellung der kurzfaserverstärkten Folie)

In einem Heissmischer (Innentemperatur 120°C) wird nach dem Dry-Blend-Verfahren (Kunststoff Handbuch PVC Teil 2 Becker/Braun, 1986, Hanser-Verlag, Seiten 832-834) mit den in Tabelle I angegebenen Komponenten in den angegebenen % Mengen unter Rühren während ca. 8-12 Minuten das Dry-Blend hergestellt. Anschliessend erfolgt die Zugabe der mit einer Aminosilanverbindung bzw. Epoxysilanverbindung oberflächenbehandelten Kurzfaser in den Heissmischer, in den ebenfalls in Tabelle I angegebenen Mengen/Länge unter weiterer Rührung und Mischung während etwa 2-4 Minuten bei 120°C. Nach dem Abkühlen der Mischung im Kühlmischer auf ca. 70°C wird die Mischung in einen Buss-Kneter gegeben, in welchem die Homogenisierung und Plastifizierung der Mischung bei etwa 160°C erfolgt. Die plastifizierte Mischung wird anschliessend vom Extruder zum Kalander transportiert, auf welchem die faserverstärkte Folie mit einer gewünschten Dicke von 0,8-4 mm und einer Breite von 1-2 Meter hergestellt wird; anschliessend wird diese durch Kühlwalzen des Kalanders wieder auf 25°C abgekühlt und aufgerollt.

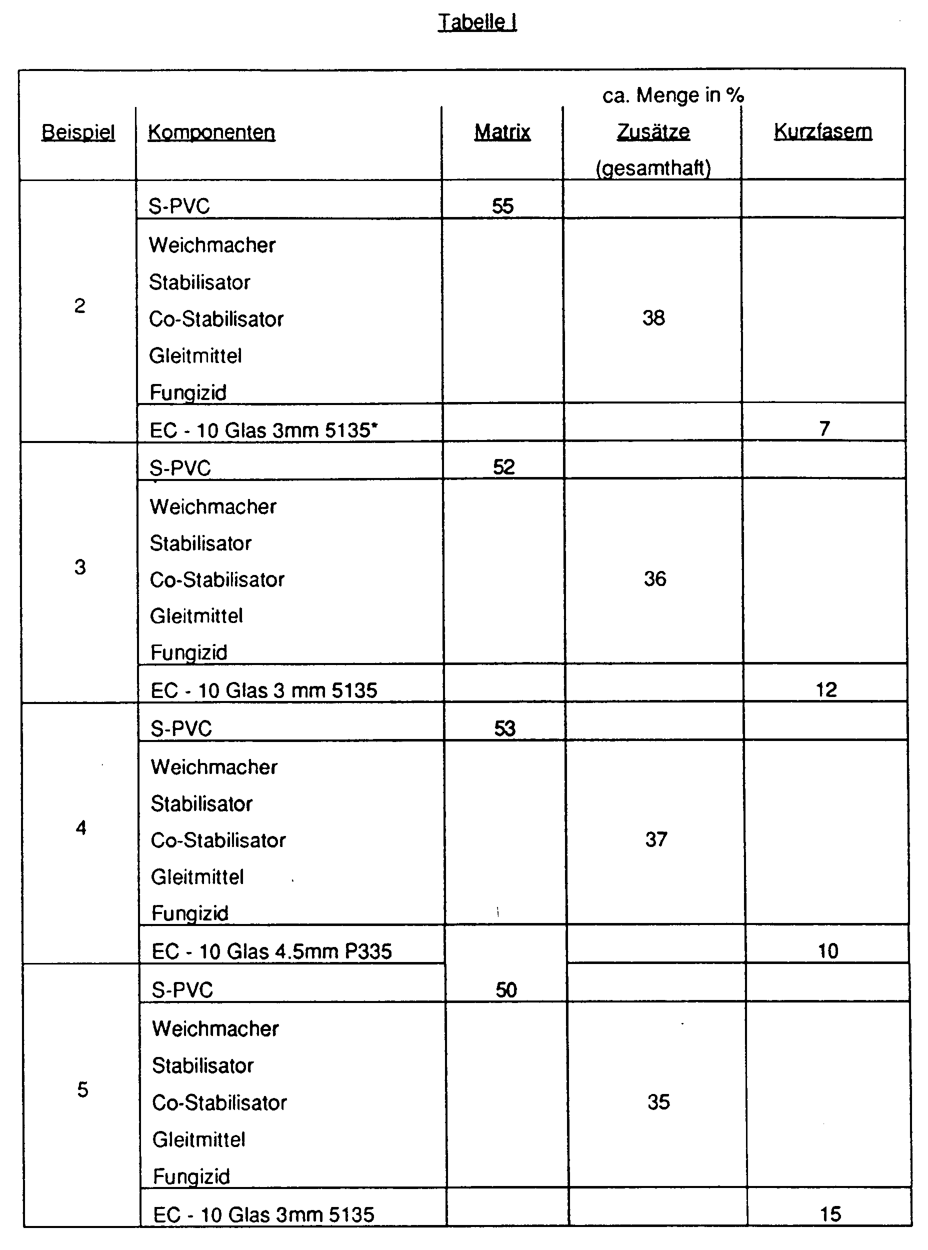

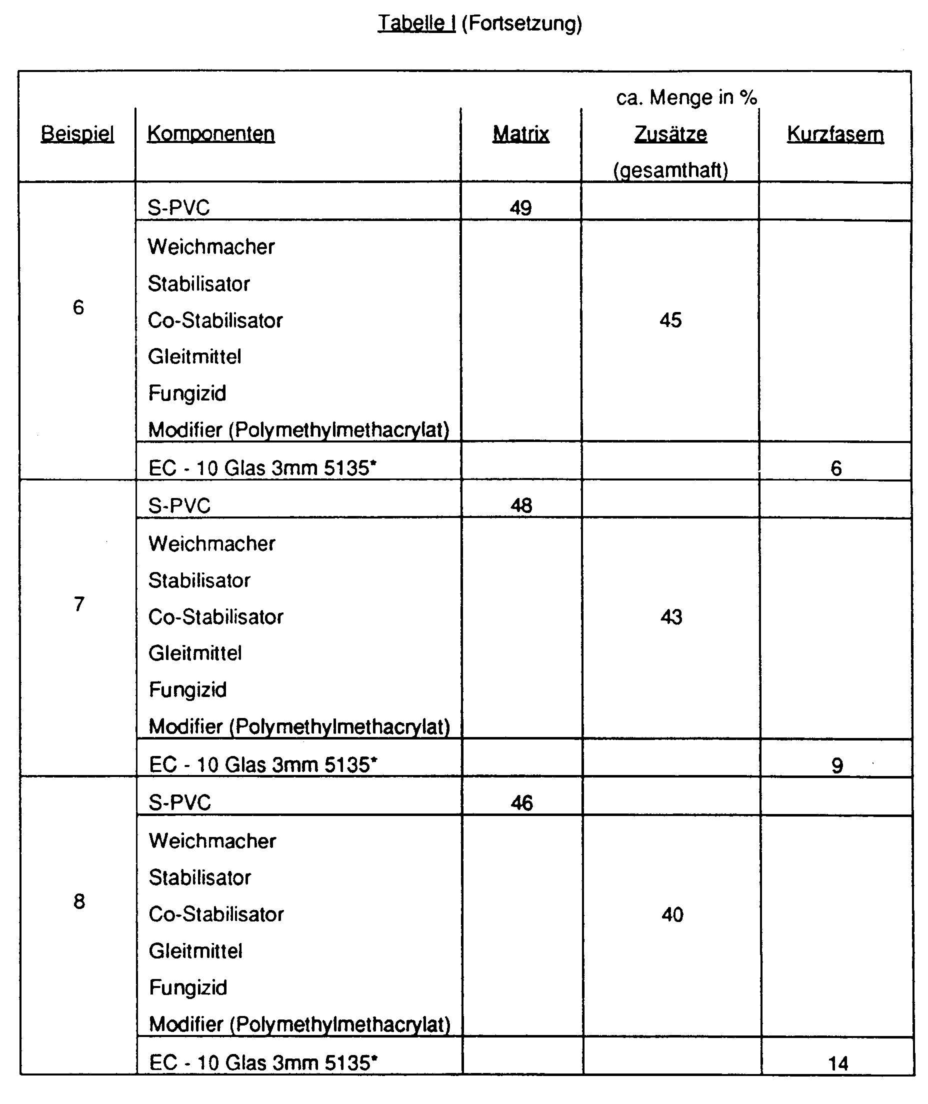

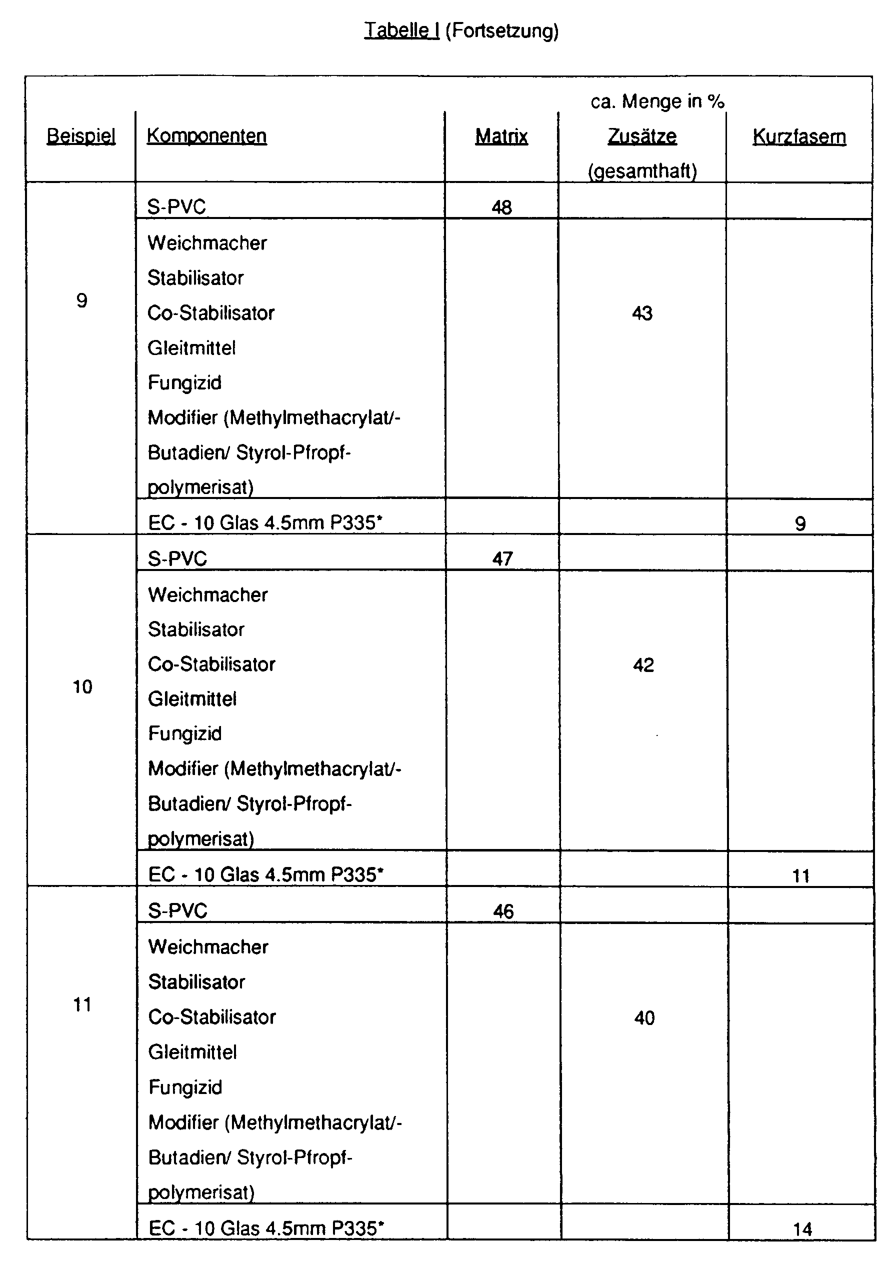

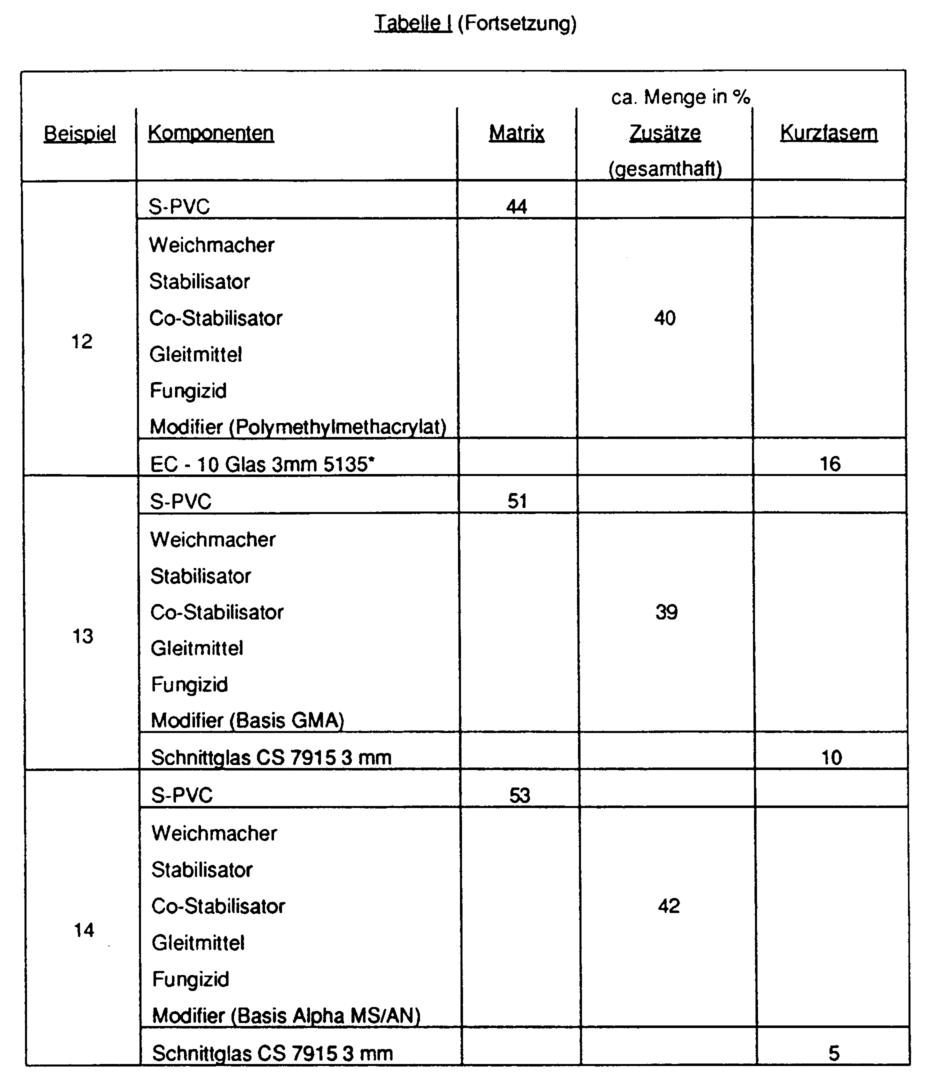

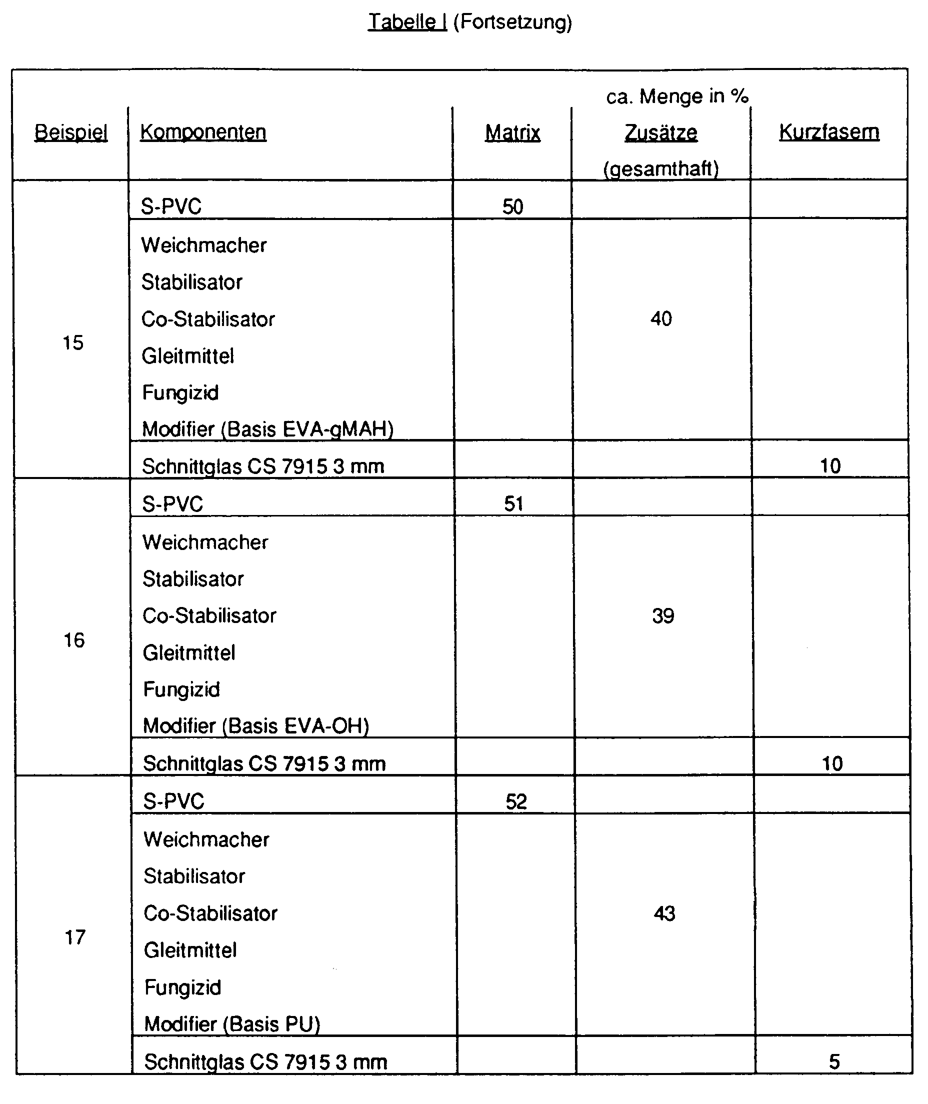

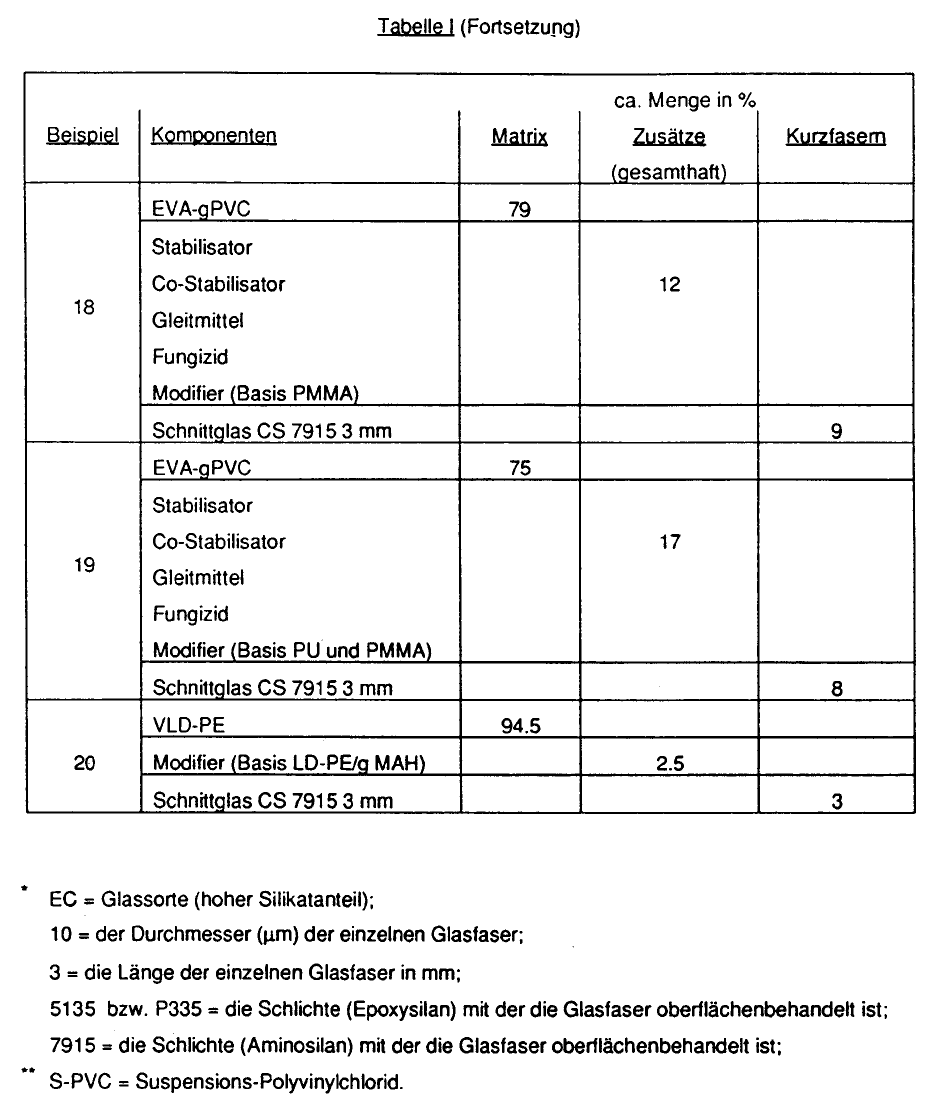

Die Eigenschaften der gemäss den Beispielen 1-12 erhaltenen kurzfaserverstärkten Folien sind aus der folgenden Tabelle II ersichtlich.

Die Eigenschaften der gemäss den Beispielen 13-20 erhaltenen kurzfaserverstärkten Folien sind aus der folgenden Tabelle III ersichtlich.

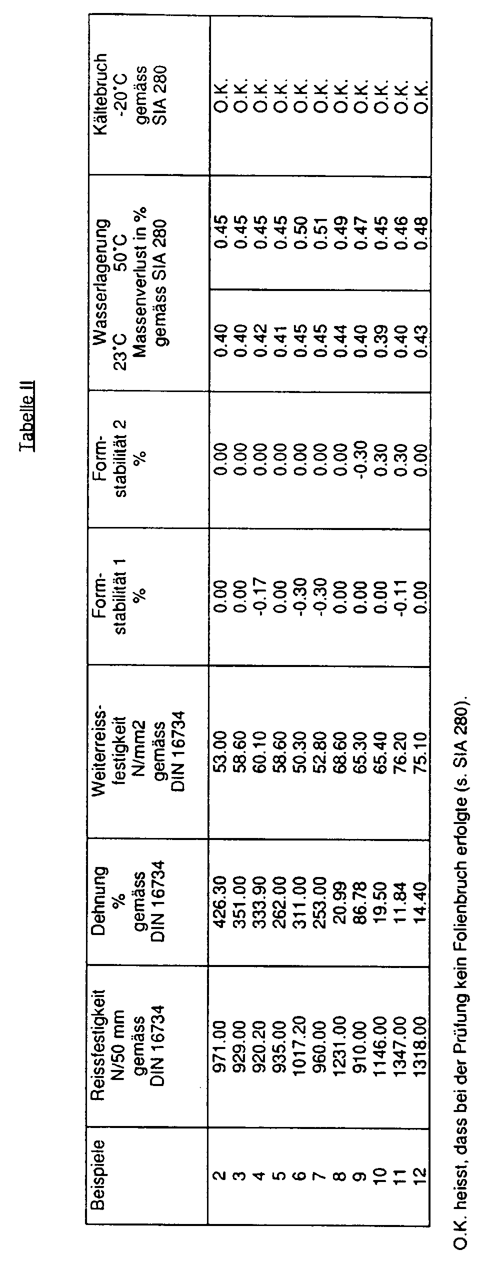

**Tabelle III**

| Beispiele | Reissfestigkeit N/mm2 DIN 16734 | Dehnung % DIN 16734 | Weiterreissfestigkeit N/mm DIN 16734 | Formstabilität % 6 Std. 80°C |
|---|---|---|---|---|
| 13 | 18.9 | 10.4 | 64.2 | -0.3 |
| 14 | 19.1 | 193.8 | 50.1 | -0.25 |
| 15 | 19.8 | 13.6 | 67.2 | 0.2 |
| 16 | 23 | 27.4 | 71.6 | -0.4 |
| 17 | 18.7 | 30 | 66.4 | -0.34 |
| 18 | 12.2 | 242 | 37.8 | -0.7 |
| 19 | 20.83 | 30.4 | 61.8 | -0.5 |
| 20 | 19.03 | 68.0 | 27.6 | -0.8 |

Die Tests für "Formstabilität 1" und Formstabilität 2" der Tabelle II werden wie folgt durchgeführt:

### Formstabilität 1

Dieser Test wird in Anlehnung an die SIA 280 Norm durchgeführt.
Zu diesem Zweck werden runde. Probekörper ausgestanzt, ihre Dimensionen vermessen und während 24 Stunden bei 80°C gelagert.
Nach dem abkühlen der Proben werden diese wiederum vermessen und die Durchmesseränderung registriert.

### Formstabilität 2

Dieser Test wird wie folgt durchgeführt:
Rechteckige Probekörper werden auf 80°C erwärmt, isoliert und anschliessend sofort mit einer Kraft von 200 N gedehnt.
Die gedehnten Proben werden sofort mit Eiswasser abgekühlt und vermessen. Anschliessend werden die Proben wiederum 24 Stunden bei 80°C gelagert und die Längenänderung vermessen.

### Beispiel 21

Eine gemäss Beispiel 2 mit dem Zusatz von 10% EC - 10 Glasfaser von 3 mm Länge hergestellte Folie mit einer Dicke von 1.5 mm und Breite von 200 cm wird auf dem Dach über die Wärmedämmung ausgerollt und an den Ecken und dem Randbereich, gemäss vorgeschriebener Verlegeanleitung mechanisch befestigt. Die Folienbahnen werden an ihrer Längsseite mittels Heissluft miteinander verschweisst.

Die so verlegte Folie weist u.a. folgende Eigenschaften auf. Hohe UV-und Witterungsbeständigkeit; gute mechanische Werte (Reissfestigkeit, Weiterreisskraft, usw.); sehr gute Beständigkeit gegen Umwelteinflüsse (Mikroorganismen, Wasser, Wind, usw.); Wasserdampfdurchlässigkeit; gute chemische Beständigkeit; sehr gute Formstabilität; Recyclierbarkeit; und gute Kälteflexibilität.

### Beispiel 22

Eine gemäss Beispiel 3 hergestellte Folie mit einem Zusatz von 5% EC - 10 Glas 4.5 mm, einer Breite von 200 cm und einer Dicke von 2.4 mm wird in einem Tunnel an der Tunnelwand mit mechanischen Befestigungsstiften verankert. Die Längsseiten der Folien werden mit Heissluft miteinander verschweisst. Damit schützt die Tunnelabdeckfolie vor Wassereinbrüchen.

Die so verlegte Folie weist u.a. folgende Eigenschaften auf: Gute mechanische Festigkeiten; gute Formstabilität; sehr gute Beständigkeit gegen Wassereinbruch; Flammhemmend, und Recyclierbarkeit.

## Patentansprüche

1. Kurzfaserverstärkte Kunststoffolie, die aus einer Kunststoffmatrix besteht, welche oberflächenbehandelte Kurzfasern aus Glas enthält, dadurch gekennzeichnet, dass die Kunststoffolie derart flexibel ist, dass sie für die Verwendung im Dach- und Tunnelbau, als Abdichtung für Deponien, Wasserreservoir, Tank-Lining und Gewässerschutz geeignet ist und die SIA-Norm 280 erfüllt.

2. Kurzfaserverstärkte Kunststoffolie gemäss Anspruch 1, dadurch gekennzeichnet, dass die Matrix ein Thermoplast, ein Elastomer, ein thermoplastisches Elastomer oder ein Polymerblend ist.

3. Kurzfaserverstärkte Kunststoffolie gemäss Anspruch 2, dadurch gekennzeichnet, dass die Matrix ein Thermoplast ist.

4. Kurzfaserverstärkte Kunststoffolie gemäss Anspruch 3, dadurch gekennzeichnet, dass die Matrix ein Homopolymerisat aus Polyethylen, Polypropylen, Polyamid, Polyester oder Polyvinylchlorid oder ein Copolymerisat aus Styrol/Acrylnitril, Styrol/Butadien/Acrylnitril oder Polyvinylchlorid/Ethylenvinylacetat ist.

5. Kurzfaserverstärkte Kunststoffolie gemäss Anspruch 4, dadurch gekennzeichnet, dass die Matrix Weich-Polyvinylchlorid, Ethylenvinylacetat gepfropft mit Polyvinylchlorid, oder Polyethylen ultra-niederer Dichte ist.

6. Kurzfaserverstärkte Kunststoffolie gemäss einem der Ansprüche 1 bis 5, dadurch gekennzeichnet, dass die oberflächenbehandelten Kurzfasern eine Länge von 0.3 bis 10 mm und einen Durchmesser von 5 µm bis 1 mm aufweisen.

7. Kurzfaserverstärkte Kunststoffolie gemäss Anspruch 6, dadurch gekennzeichnet, dass die oberflächenbehandelten Kurzfasern eine Länge von 1 bis 6 mm aufweisen.

8. Kurzfaserverstärkte Kunststoffolie gemäss einem der Ansprüche 1 bis 7, dadurch gekennzeichnet, dass diese 1 bis 40 Gew.-% oberflächenbehandelter Kurzfasern enthält.

9. Kurzfaserverstärkte Kunststoffolie gemäss Anspruch 8, dadurch gekennzeichnet, dass diese 2 bis 20 vor allem 2 bis 16 Gew.-% oberflächenbehandelter Kurzfasern enthält.

10. Kurzfaserverstärkte Kunststoffolie gemäss einem der Ansprüche 6 bis 9, dadurch gekennzeichnet, dass die Kurzfaser eine Länge von 3 bis 6 mm aufweist.

11. Kurzfaserverstärkte Kunststoffolie gemäss einem der Ansprüche 6 bis 10, dadurch gekennzeichnet, dass die Kurzfaser einen Durchmesser von 8-14 µm aufweist.

12. Kurzfaserverstärkte Kunststoffolie gemäss einem der Ansprüche 1 bis 11, dadurch gekennzeichnet, dass die Kurzfaser mit Epoxysilan oder Aminosilan oberflächenbehandelt ist.

13. Kurzfaserverstärkte Kunststoffolie gemäss einem der Ansprüche 1 bis 12, dadurch gekennzeichnet, dass diese zusätzlich einen oder mehrere Zusatzstoffe in einer Menge von 0.1 bis 70 Gew.-%, vorzugsweise 2 bis 45 Gew.-% enthält.

14. Kurzfaserverstärkte Kunststoffolie gemäss einem der Ansprüche 1 bis 13, dadurch gekennzeichnet, dass die Kunststoff-Matrix etwa 44 bis 55 Gew.-% Weich-Polyvinylchlorid ist, welches ca. 2 bis 16 Gew.-% einer oberflächenbehandelten Glasfaser mit einer Länge von 3 bis 6 mm und als Zusatz etwa 35-45 Gew.-% von Zusätzen, vor allem Weichmacher, Stabilisatoren, Co-Stabilisator, Gleitmittel, Fungizid und gegebenenfalls Modifier enthält.

15. Kurzfaserverstärkte Kunststoffolie gemäss einem der Ansprüche 1 bis 13, dadurch gekennzeichnet, dass die Kunststoff-Matrix etwa 75 bis 80 Gew.-% Ethylenvinylacetat gepfropft mit Polyvinylchlorid ist, welches ca. 2 bis 10 Gew.-% einer oberflächenbehandelten Glasfaser mit einer Länge von 3 bis 6 mm und ca. 10 bis 20 Gew.-% eines Zusatzes, vor allem einen Stabilisator, Co-Stabilisator, Gleitmittel, Fungizid und gegebenenfalls einen Modifier enthält.

16. Kurzfaserverstärkte Kunststoffolie gemäss einem der Ansprüche 1 bis 13, dadurch gekennzeichnet, dass die Kunststoff-Matrix etwa 90 bis 95 Gew.-% Polyethylen ultra-niederer Dichte ist, welches etwa 2 bis 5 Gew.-% einer oberflächenbehandelten Glasfaser mit einer Länge von 3 bis 6 mm und etwa 2 bis 5 Gew.-% eines Zusatzes, vor allem eines Modifiers, enthält.

17. Verfahren zur Herstellung einer kurzfaserverstärkten Kunststoffolie gemäss einem der Ansprüche 1 bis 16 nach dem Kalandrierverfahren.

18. Verwendung der kurzfaserverstärkten Kunststoffolie gemäss einem der Ansprüche 1 bis 16 bzw. der gemäss dem Verfahren nach Anspruch 17 hergestellten kurzfaserverstärkten Kunststoffolie, für den Dach- und Tunnelbau.

19. Verwendung der kurzfaserverstärkten Kunststoffolie gemäss einem der Ansprüche 1 bis 16 bzw. der gemäss dem Verfahren nach Anspruch 17 hergestellten kurzfaserverstärkten Kunststoffolie, als Abdichtung für Deponien, Wasserreservoir, Tank-Lining und Gewässerschutz.

## Claims

1. A short fibre reinforced plastic foil consisting of a plastic matrix which contains surface-treated short fibres of glass characterized in that said foil is so flexible that it is suitable for the use in constructing a roof or tunnel, as seal for landfills, water reservoirs, tank lining and water protection and it meets the SIA-Norm 280.

2. A short fibre reinforced plastic foil in accordance with claim 1 characterized in that the matrix is a thermoplastic material, an elastomer, a thermoplastic elastomer or a polymer blend.

3. A short fiber reinforced plastic foil in accordance with claim 2 characterized in that the matrix is a thermoplastic material.

4. A short fiber reinforced plastic foil in accordance with claim 3 characterized in that the matrix is a homopolymer made of polyethylene, polypropylene, polyamide, polyester or polyvinyl chloride or a copolymer made of Styrene/acrylonitrile, Styrene/butadiene/ acrylonitrile or polyvinyl chloride/ethylene vinyl acetate.

5. A short fiber reinforced plastic foil in accordance with claim 4 characterized in that the matrix is a plasticized polyvinyl chloride, ethylene acetate grafted with polyvinyl chloride or an ultra low density polyethylene.

6. A short fiber reinforced plastic foil in accordance with one of the claims 1 to 5 characterized in that the surface-treated short fibres have a length of 0.3 to 10mm and a diameter of 5µm to 1mm.

7. A short fiber reinforced plastic foil in accordance with claim 6 characterized in that the surface-treated short fibres have a length of 1 to 6mm.

8. A short fiber reinforced plastic foil in accordance with one of the claims 1 to 7 characterized in that said foil contains 1 to 40 weight % of surface-treated short fibres.

9. A short fiber reinforced plastic foil in accordance with claim 8 characterized in that said foil contains 2 to 20 weight %, in particular 2 to 16 weight % surface-treated short fibres.

10. A short fiber reinforced plastic foil in accordance with one of claims 6 to 9 characterized in that the short fibre has a length of 3 to 6 mm.

11. A short fiber reinforced plastic foil in accordance with one of the claims 6 to 10 characterized in that the short fibre has a diameter of 8 to 14 µm.

12. A short fiber reinforced plastic foil in accordance with one of claims 1 to 11 characterized in that the short fibre is surface-treated with epoxy silane or amino silane.

13. A short fiber reinforced plastic foil in accordance with one of claims 1 to 12 characterized in that said foil contains additionally one or more additives in an amount of 0.1 to 70 weight % preferably 2 to 45 weight %.

14. A short fiber reinforced plastic foil in accordance with one of the claims 1 to 13 characterized in that the plastic matrix is 44 to 55 weight % plasticized polyvinyl chloride which contains approximately 2 to 16 weight % of a surface-treated glass fibre of a length of 3 to 6 mm and as an additive approximately 35 to 45 weight % of additives in particular softeners, stabilizers, co-stabilizers, lubricants, fungizid and optionally modifiers.

15. A short fiber reinforced plastic foil in accordance with one of the claims 1 to 13 characterized in that the plastic matrix is approximately 75 to 80 weight % ethylene vinyl acetate grafted with polyvinyl chloride which contains approximately 2 to 10 weight % of a surface-treated glass fibre of a length of 3 to 6 mm and approximately 10 to 20 weight % of an additive, in particular a stabilizer, co-stabilizer, lubricant, fungizide and optionally a modifier.

16. A short fiber reinforced plastic foil in accordance with one of the claims 1 to 13 characterized in that the plastic matrix is approximately 90 to 95 weight % ultra low density polyethylene which contains about 2 to 5 weight % of a surface-treated glass fibre of a length of 3 to 6 mm and about 2 to 5 weight % of an additive in particular a modifier.

17. A method for preparation of a short fiber reinforced plastic foil in accordance with one of the claims 1 to 16 according to the calendering process.

18. Use of the short fibre reinforced plastic foil in accordance with one of the claims 1 to 16 or the foil produced according to the method of claim 17 respectively, for constructing a roof and tunnel.

19. Use of the short fibre reinforced plastic foil in accordance with one of the claims 1 to 16 or the foil produced according to the method of claim 17 respectively, as seal for landfills, water reservoirs, tank lining and water protection.

## Revendications

1. Feuille de matière synthétique renforcée par des fibres courtes, qui est constituée d'une matrice de matière synthétique qui contient des fibres courtes de verre, traitées en surface, caractérisée en ce que la feuille de matière synthétique est flexible de façon à convenir à l'utilisation dans la construction de recouvrements et de tunnels, comme étanchéification pour décharges, réservoirs à eau, revêtements de citerne et protection des eaux et à répondre à la norme SIA 280.

2. Feuille de matière synthétique renforcée par des fibres courtes suivant la revendication 1, caractérisée en ce que la matrice est une substance thermoplastique, un élastomère, un élastomère thermoplastique ou un mélange de polymères.

3. Feuille de matière synthétique renforcée par des fibres courtes suivant la revendication 2, caractérisée en ce que la matrice est faite d'une matière thermoplastique.

4. Feuille de matière synthétique renforcée par des fibres courtes suivant la revendication 3, caractérisée en ce que la matrice est un homopolymère de polyéthylène, de polypropylène, de polyamide, de polyester ou de chlorure de polvvinyle ou un copolymère de styrène/acrylonitrile, de styrène/butadiène/acrylonitrile ou de chlorure de polyvinyle/éthylène-acétate de vinyle.

5. Feuille de matière synthétique renforcée par des fibres courtes suivant la revendication 4, caractérisée en ce que la matrice est du chlorure de polyvinyle mou, de l'éthylène-acétate de vinyle greffé avec du chlorure de polyvinyle, ou du polyéthylène de densité ultrabasse.

6. Feuille de matière synthétique renforcée par des fibres courtes suivant l'une des revendications 1 à 5, caractérisée en ce que les fibres courtes traitées en surface présentent une longueur de 0,3 à 10 mm et un diamètre de 5 µm à 1 mm.

7. Feuille de matière synthétique renforcée par des fibres courtes suivant la revendication 6, caractérisée en ce que les fibres courtes traitées en surface présentent une longueur de 1 à 6 mm.

8. Feuille de matière synthétique renforcée par des fibres courtes suivant l'une des revendications 1 à 7, caractérisée en ce que celle-ci contient 1 à 40% en poids de fibres courtes traitées en surface.

9. Feuille de matière synthétique renforcée par des fibres courtes suivant la revendication 8, caractérisée en ce que celle-ci contient 2 à 20, en particulier 2 à 16, % en poids de fibres courtes traitées en surface.

10. Feuille de matière synthétique renforcée par des fibres courtes suivant l'une des revendications 6 à 9, caractérisée en ce que la fibre courte présente une longueur de 3 à 6 mm.

11. Feuille de matière synthétique renforcée par des fibres courtes suivant l'une des revendications 6 à 10, caractérisée en ce que la fibre courte présente un diamètre de 8-14 µm.

12. Feuille de matière synthétique renforcée par des fibres courtes suivant l'une des revendications 1 à 11, caractérisée en ce que la fibre courte est traitée en surface par de l'époxysilane ou de l'aminosilane.

13. Feuille de matière synthétique renforcée par des fibres courtes suivant l'une des revendications 1 à 12, caractérisée en ce que celle-ci contient en supplément un ou plusieurs additifs en une quantité de 0,1 à 70% en poids, de préférence de 2 à 45% en poids.

14. Feuille de matière synthétique renforcée par des fibres courtes suivant l'une des revendications 1 à 13, caractérisée en ce que la matrice de matière synthétique est formée d'environ 44 à 55% en poids de chlorure de polyvinyle mou, qui contient environ 2 à 16% en poids d'une fibre de verre traitée en surface présentant une longueur de 3 à 6 mm et, comme additif, environ 35 à 45% en poids d'additifs, en particulier d'agent plastifiant, de stabilisant, de co-stabilisant, de lubrifiant, de fongicide et éventuellement de modificateur.

15. Feuille de matière synthétique renforcée par des fibres courtes suivant l'une des revendications 1 à 13, caractérisée en ce que la matrice de matière synthétique est formée d'environ 75 à 80% en poids d'éthylène-acétate de vinyle greffé avec du chlorure de polyvinyle, qui contient environ 2 à 10% en poids d'une fibre de verre traitée en surface ayant une longueur de 3 à 6 mm et environ 10 à 20% en poids d'un additif, en particulier d'un stabilisant, d'un co-stabilisant, d'un lubrifiant, d'un fongicide et éventuellement d'un modificateur.

16. Feuille de matière synthétique renforcée par des fibres courtes suivant l'une des revendications 1 à 13, caractérisée en ce que la matrice de matière synthétique est formée d'environ 90 à 95% en poids de polyéthylène de densité ultrabasse, qui contient environ 2 à 5% en poids d'une fibre de verre traitée en surface ayant une longueur de 3 à 6 mm et environ 2 à 5% en poids d'un additif, en particulier d'un modificateur.

17. Procédé de préparation d'une feuille de matière synthétique renforcée par des fibres courtes suivant l'une des revendications 1 à 16, selon le procédé de calandrage.

18. Utilisation de la feuille de matière synthétique renforcée par des fibres courtes suivant l'une des revendications 1 à 16 ou de la feuille de matière synthétique renforcée par des fibres courtes préparée selon le procédé suivant la revendication 17, pour la construction de recouvrements et de tunnels.

19. Utilisation de la feuille de matière synthétique renforcée par des fibres courtes suivant l'une des revendications 1 à 16 ou de la feuille de matière synthétique renforcée par des fibres courtes préparée selon le procédé suivant la revendication 17, comme étanchéification pour des décharges, des réservoirs à eau, un revêtement de citerne et une protection des eaux.
